(19) Europäisches Patentamt
European Patent Office
Office européen des brevets

(11) Publication number : 0 500 259 A2

(12) # EUROPEAN PATENT APPLICATION

(21) Application number : 92301160.5

(22) Date of filing : 12.02.92

(51) Int. Cl.$^5$ : **C08G 18/62**, C08L 75/04

(30) Priority : 20.02.91 US 658287

(43) Date of publication of application :
26.08.92 Bulletin 92/35

(84) Designated Contracting States :
BE DE FR GB IT NL

(71) Applicant : THE DOW CHEMICAL COMPANY
2030 Dow Center Abbott Road
Midland, MI 48640 (US)

(72) Inventor : Henton, David E.
5409 Woodview Pass
Midland, Michigan 48640 (US)
Inventor : Chen, Augustin T.
893 Farmington
Cheshire, Connecticut (US)
Inventor : Moses, Paul J.
5619 Evergreen
Midland, Michigan 48640 (US)
Inventor : Ehrlich, Benjamin S.
2207 Colonial Drive
League City, Texas (US)

(74) Representative : Raynor, John et al
W.H. Beck, Greener & Co 7 Stone Buildings
Lincoln's Inn
London WC2A 3SZ (GB)

(54) **Thermally processable blends of high modulus polyurethanes and impact modifiers.**

(57) The toughness of a thermoplastic, rigid polyurethane is markedly improved by incorporating an NCO-reactive impact modifier such as styrene/butadiene rubber grafted with a copolymer of styrene, acrylonitrile and 2-hydroxyethyl acrylate. This toughened polyurethane is particularly useful in making structural automotive body parts and housings for electrical appliances.

EP 0 500 259 A2

Jouve, 18, rue Saint-Denis, 75001 PARIS

This invention relates to synthetic polymeric resin compositions useful for thermoplastic fabrication and, more particularly to blends of extrudable urethane polymers and polymeric impact modifiers.

Extrudable polyurethanes having high modulus and good thermal properties are known to be useful in the manufacture of auto parts such as distributor covers as well as covers and containers for electronic circuitry. See, for example, U.S. Patent 4,822,827. Typically, such polyurethanes can be produced by the reaction of a polyisocyanate with a cycloalkane polyol having a molecular weight in the range from 60 to 400.

Unfortunately, such polyurethanes do not exhibit the impact strength required for many applications. To increase impact strength of such polyurethanes, it has been a practice to incorporate minor amounts of impact modifiers such as high rubber content ABS resins, methyl methacrylate/ butadiene/styrene terpolymers, chlorinated polyethylenes, ethylene/vinyl acetate copolymers as well as certain multi-phase composite polymers into such polyurethanes. Such practices have met with only limited success with the resultant blends exhibiting only moderately improved impact strength. In addition, the resultant blends often do not exhibit sufficient processability to be readily extruded and molded into desired shapes.

In view of these deficiencies of the conventional high modulus, extrudable polyurethanes, it is highly desirable to provide an impact modified polyurethane composition which also has the ability to withstand organic solvents and temperatures in excess of 80°C and sufficient thermal processability to be extrudable and moldable into a variety of shapes.

In a first aspect, the present invention is an impact-modified, thermally processable, high modulus polyurethane composition exhibiting resistance to solvents and sufficient thermal properties to withstand temperatures in excess of 80°C. This composition comprises (1) a thermally processable, rigid polyurethane as a continuous phase of the composition and (2) an amount of an isocyanate-reactive (NCO-reactive), impact modifying, multi-phase polymer sufficient to increase the impact strength of the composition to a value that is greater than the impact strength of a comparable blend of the polyurethane and the impact modifying polymer having no NCO-reactive moiety. The NCO-reactive polymer is either dispersed in or co-continuous with the polyurethane.

In a second aspect, this invention is a rubber-modified composition comprising (1) a thermally processable, rigid polyurethane, (2) a homogeneous, NCO-reactive polymer having a plurality of active hydrogen groups and (3) a particulate rubbery polymer which contains no NCO-reactive moiety and is dispersed in a continuous phase of one or both of the polymers or resides at the interphase of the two polymers (1) and (2) wherein polymers (2) and (3) are present in an amount sufficient to increase the impact strength of the composition to a value greater than the impact strength of a comparable blend of the polyurethane, the homogeneous polymer having no NCO-reactive moiety and the rubbery polymer.

Surprisingly, the polyurethane compositions of the present invention exhibit high modulus, excellent solvent resistance and toughness (impact strength) greater than the toughness of blends of similar polymeric components which contain no NCO-reactive moieties. As a result of their unique combination of properties, these polyurethane compositions are useful in automotive body parts, power tools, appliances, and other applications requiring good toughness and resistance to heat and solvents.

The polyurethane employed in the practice of this invention is thermally processable, i.e., it exhibits the character of heat plastification upon heating to a temperature of 200°C to 270°C and can be extruded, injection molded or otherwise fabricated in the same manner as any other thermoplastic polymer. Generally polyurethane will contain sufficient hard segment to impart a tensile modulus of at least 150,000 pounds per square inch (psi) (1034 kPa). Preferably the hard segment constitutes at least 90 weight percent of the polyurethane, most preferably at least 100 weight percent. Preferably, this hard segment has a glass transition temperature (Tg) of at least 60°C, more preferably at least 80°C, most preferably at least 115°C. Of particular interest are the polyurethanes prepared from an organic diisocyanate, a difunctional active hydrogen extender at least a part of which is a diol, diamine or comparable difunctional active hydrogen compound having a cyclo-alkanedialkylene or a cycloalkylene moiety (herein such difunctional active hydrogen compounds shall be collectively referred to as a cyclic diahl) and an optional polyahl which can have a functionality greater than 2. The term "ahl" means an active hydrogen moiety capable of reacting with an isocyanate group to form a urethane, urea, thiourea or corresponding linkage depending on the particular active hydrogen moiety being reacted. Examples of such preferred polyurethanes are the thermoplastic and similarly extrudable polyurethanes described in U.S. Patent 4,822,827.

Organic diisocyanates which may be employed to make the polyurethane include aromatic, aliphatic and cycloaliphatic diisocyanates and combinations thereof. Representatives of these types are m-phenylene diisocyanate, tolylene-2,4-diisocyanate, tolylene-2,6--diisocyanate, hexamethylene-1,6-diisocyanate, tetramethylene-1,4-diisocyanate, cyclohexane-1,4-diisocyanate, diphenylmethane-4,4′-diisocyanate, 4,4′-biphenylene diisocyanate and other diisocyanates disclosed in U.S. Patent 4,731,416. Due to their availability and properties, the aromatic diisocyanates such as tolylene diisocyanate, 4,4′-methyldiphenyl diisocyanate and

polymethylene polyphenylisocyanate are preferred, with diphenylmethane-4,4'-diisocyanate and liquid forms based thereon being most preferred. Also suitable are isocyanate-terminated prepolymers such as those prepared by reacting polyisocyanates with polyols.

The cyclic diahl is employed as a chain extender in an amount sufficient to impart the required Tg for the hard segment. The cyclic diahl component may be a diahl or a mixture of more than one diahl. The cyclic ring may be substituted by inert groups in addition to the two active hydrogen moieties or alkylene active hydrogen moieties. By "inert group" is meant any group that does not react with an isocyanate group or active hydrogen group such as hydroxyl or amino or does not otherwise interfere the polyurethane or polyurea reaction. Examples of inert groups are $C_1$ to $C_8$ alkyls, nitro, $C_1$ to $C_8$ alkoxy, halo and cyano. Illustrative cycloalkane diols include 1,3-cyclobutanediol, 1,3-cyclopentanediol, 1,2-cyclohexanediol, 1,3-cyclohexanediol, 1,4-cyclo-hexanediol, 2-methyl-1,4-cyclohexanediol, 4,4'-methylene bis(cyclohexanol) and 4,4'-isopropylidenebis(cyclohexanol) and other cycloalkanediols listed in U.S. Patent 4,822,827. Illustrative of the cycloalkane dialkanols include cyclohexane dimethanol. Of the cycloalkanediols and cycloalkane dialkanols (also called bis(hydroxyalkyl)cycloalkanes), the cyclohexanediols, cyclohexane dimethanol and 4,4'-alkylidenebis(cyclohexanols) are more preferred. Also suitable as cyclic diahls are the corresponding diamines, dithiols and diamides of cycloalkanes and dialkylcycloalkanes.

In addition to the cyclic diahls, other chain extenders are optionally employed in making the polyurethane provided that such chain extenders are used in amounts which do not reduce the glass transition temperature of the polyurethane below 60°C. Illustrative of such extenders are aliphatic straight and branched chain diols having from 2 to 10 carbons in the chain, including, aliphatic diamines such as ethylenediamine and diethylenetriamine, and aromatic diamines such as diethyltoluenediamine. Exemplary diols, which are preferred as the other extender, include ethylene glycol, 1,3-propanediol, 1,4-butanediol, 1,5-pentanediol, 1,6-hexanediol, 1,2-propanediol, 1,3- and 2,3-butanediol, and mixtures of two or more of such diols as further described in U.S. Patent 4,822,827. Trifunctional extenders such as glycerol and trimethylolpropane can also be employed in small amounts, i.e., less than 5 weight percent, in admixture with one or more of the afore-mentioned chain extenders. Larger amounts of the trifunctional extenders should be avoided in order to retain the desired thermal processability. Of the other extenders, it is more preferred to use 1,4-butanediol, 1,6-hexanediol, neopentyl glycol, ethylene glycol and diethylene glycol, either alone or in admixture with one or more of the named aliphatic diols. Most preferred of the other chain extenders are 1,4-butanediol, and 1,6-hexanediol.

The polyahl which is employed as the optional soft segment of the polyurethane includes any organic compound having at least two active hydrogen moieties wherein the compound has a molecular weight of at least 200 and a hydroxy equivalent weight of at least 50, preferably at least 100. Preferably, the polyahl is a polymer having at least two active hydrogen moieties, a molecular weight of at least 400 and a total of at least 5 monomeric units such as propylene oxide and ethylene oxide. For the purposes of this invention, an active hydrogen moiety refers to a moiety containing a hydrogen atom which, because of its position in the molecule, displays significant activity according to the Zerewitinoff test described by Woller in the *Journal of The American Chemical Society*, Vol. 49, p. 3181 (1927). Illustrative of such active hydrogen moieties are -COOH, -OH, $-NH_2$, =NH, $-CONH_2$, -SH and -CONH-. Typical polyahls are NCO-reactive and include polyols, polyamines including amine-terminated polyethers, polyamides, polymercaptans, hydroxy-terminated polyesters and polyacids, particularly as exemplified in U.S. Patent Nos. 4,394,491 and 4,822,827. In general the polyahl should not have a functionality greater than 4 in order to enable the polyurethane to retain its thermal processability. For the polyahls having a functionality of 3 or 4, the amount of polyahl employed should be relatively small, e.g., less than about 10 weight percent based on the polyahl, to avoid making a thermoset polyurethane.

Of the foregoing polyahls, the polyols are preferred. Examples of such polyols are the polyol polyethers, the polyol polyesters, hydroxy functional acrylic polymers, hydroxyl-containing epoxy resins, and other polyols described in U.S. Patent 4,731,416.

Polyether polyols which are most advantageously employed as the polyahl in the practice of this invention are the polyalkylene polyether polyols including the polymerization products of alkylene oxides and other oxiranes with water or polyhydric alcohols having from two to eight hydroxyl groups. Exemplary alcohols that are advantageously employed in making the polyether polyol include ethylene glycol, 1,3-propylene glycol, 1,2-propylene glycol, 1,4-butylene glycol, 1,3-butylene glycol, 1,2-butylene glycol, 1,5-pentane diol, 1,7-heptane diol, glycerol, 1,1,1-trimethylolpropane, 1,1,1-trimethylolethane, hexane-1,2,6-triol, α-methyl glucoside, pentaerythritol, erythritol, pentatols and hexatols. Also included within the term "polyhydric alcohol" are sugars such as glucose, sucrose, fructose and maltose as well as compounds derived from phenols such as 2,2-(4,4'-hydroxyphenyl)propane, commonly known as bisphenol A. Illustrative oxiranes that are advantageously employed in the preparation of the polyether polyol include simple alkylene oxides such as ethylene oxide, propylene oxide, butylene oxide, and amylene oxide; glycidyl ethers such as t-butyl glycidyl ether and phenyl glycidyl ether; and random or block copolymers of two or more of these oxiranes. The polyalkylene polyether polyols

may have primary, secondary or tertiary hydroxyl groups and, preferably, are polyethers prepared from alkylene oxides having from two to six carbon atoms such as ethylene oxide, propylene oxide and butylene oxide. Polyether polyols which are most preferred include the alkylene oxide addition products of water, trimethylolpropane, glycerine, pentaerythritol, sucrose, sorbitol, propylene glycol and blends thereof having hydroxyl equivalent weights of from 200 to 10,000, especially from 350 to 3000.

In general, the overall proportions of the components of the polyurethane are such that the active hydrogen containing components, i.e., the chain extender(s) and the optional polyahl, balance the isocyanate component(s) so that stoichiometric equivalency of the reactants is maintained. However, for various reasons, it is not always possible or desirable to meet the 1:1 equivalency. Thus, the proportions are such that the overall ratio of isocyanate groups to active hydrogen groups is in the range from 0.90:1 to 1.15:1, and preferably, from 0.95:1 to 1.10:1. In the active hydrogen chain extender component, the cycloalkanediol and/or cycloalkane dialkanol portion is sufficient to provide the polyurethane with the desired Tg which portion is preferably in the range from 10 to 100, more preferably from 15 to 100, weight percent of total chain extender with the remainder being a conventional difunctional chain extender as previously discussed. The polyahl, which is optionally employed in the polyurethane, is employed in an amount which will not lower the tensile modulus of the polyurethane to values below 150,000 psi (1034 kPa) as measured in accordance with ASTM Test Method D-638. Preferably such amount is less than about 25 weight percent of the total weight of components used to make the polyurethane, with amounts less than 10 weight percent being more preferred.

The NCO-reactive, impact-modifying polymer employed in the practice of this invention is preferably a copolymer of one or more ethylenically unsaturated monomers having at least one active hydrogen moiety with one or more ethylenically unsaturated monomers which are inert to isocyanate moieties and which form elastomeric or rubber-like polymers. The copolymer may also contain other ethylenically unsaturated monomers provided that such monomers do not appreciably lower the impact modifying capability of the copolymer. The copolymer is suitably a random, block or graft copolymer or a combination thereof. In addition, the copolymer may be a monophase copolymer or a multi-phase polymeric composition such as a core/shell polymer. The copolymer is suitably prepared by mass/solution, mass/suspension or emulsion polymerization techniques or combinations thereof such as illustrated in U.S. Patent Nos. 3,931,356; 4,874,815 and 4,419,496. Preferably such copolymers have discrete rubbery polymer particles dispersed therein which particles serve as substrates having grafted thereto a portion of the isocyanate-reactive polymer as a superstrate and the remaining portion forming a matrix in which grafted particles are dispersed. Advantageously, such particles of the rubbery polymer have average diameters in the range from 0.05 to 5.0, preferably from 0.07 to 2.5 micrometers. Further it is preferred that the rubbery polymer be insoluble in the active hydrogen monomer and polymer and in the polyurethane. The rubber is usually insoluble in the polyurethane as a result of prior crosslinking of the rubber.

Monomers which form the NCO-reactive portion of the polymer are ethylenically unsaturated monomers containing an active hydrogen moiety as previously defined. Examples of preferred active hydrogen monomers include hydroxyalkyl esters of ethylenically unsaturated carboxylic acids such as hydroxyethyl acrylate, hydroxypropyl acrylate, hydroxybutyl acrylate, hydroxyethyl methacrylate or hydroxypropyl methacrylate; aminoalkyl esters of ethylenically unsaturated carboxylic acids such as aminoethyl acrylate, aminopropyl acrylate, aminoethyl methacrylate and aminopropyl methacrylate; and ethylenically unsaturated carboxylic acids such as acrylic acid, methacrylic acid, fumaric acid and maleic acid or anhydride. Of the active hydrogen monomers, the hydroxyalkyl acrylates and methacrylates are most preferred. The active hydrogen monomer is present in an amount sufficient to render the impact modifier or rubbery polymer compatible with the polyurethane, preferably an amount in the range from 0.05 to 5.0, most preferably from 0.1 to 3.0 weight percent based on the weight of the NCO-reactive polymer.

The impact modifying monomers are those ethylenically unsaturated monomers which typically polymerize to form rubbery or elastomeric polymers. Illustrative of such monomers are the 1,3-conjugated alkadiene monomers such as butadiene and isoprene and alkyl acrylates such as n-butyl acrylate, sec-butyl acrylate, 2-ethylhexyl acrylate, n-propyl acrylate, ethyl acrylate, methyl acrylate and mixtures of these monomers. Of these impact modifying monomers, 1,3-butadiene is most preferred. The impact modifying monomer is present in an amount sufficient to provide a rubber-like material having a Tg below 0°C, preferably an amount in the range from 40 to 99.95, most preferably from 45 to 99.9 weight percent based on the weight of the NCO-reactive impact modifier or the combined weight of the NCO-reactive polymer and rubbery polymer.

In addition to the foregoing monomers, the NCO-reactive, impact modifying polymer optionally contains other ethylenically unsaturated monomers such as the alkyl methacrylates wherein alkyl has from 1 to 18 carbon atoms, preferably butyl methacrylate and methyl methacrylate; monovinylidene aromatic monomers such as styrene, $\alpha$-methyl styrene, ar-methyl styrene, ar(t-butyl)styrene, ar-chlorostyrene, ar-cyanostyrene and ar-bromostyrene; $\alpha,\beta$-ethylenically unsaturated nitriles and amides such as acrylonitrile, methacrylonitrile, acrylamide, methacrylamide, N,N-dimethyl acrylamide and N-(dimethylaminomethyl)acrylamide; vinyl esters

such as vinyl acetate; vinyl ethers; vinyl ketones; vinyl and vinylidene halides as well as a wide variety of other ethylenically unsaturated materials which are copolymerizable with the afore-mentioned monomers. Of the foregoing monomers, styrene, methylmethacrylate and acrylonitrile are especially preferred. When such other optional monomers are employed, they are used in an amount which does not interfere with the function of the active hydrogen monomer(s) and the impact modifying monomer(s), preferably such an amount is in the range from 0 to 59.95, most preferably from 0 to 54.9 weight percent based on the weight of the NCO-reactive impact modifier or the combined weight of the NCO-reactive polymer and rubbery polymer.

The multi-phase, NCO-reactive, impact modifying polymer or combination of homogeneous,NCO-reactive polymer and rubbery polymer is employed in the polyurethane in an amount sufficient to increase the notched impact strength of the polyurethane to a value which is greater than the notched impact strength for a comparable blend of the polyurethane and polymers identical to the NCO-reactive, impact modifying polymer or NCO-reactive polymer except that they have no NCO-reactive moieties. More preferably, the composition of the first aspect comprises from 50 to 95 weight percent of the polyurethane and from 5 to 50 weight percent of the NCO-reactive, impact modifier, most preferably, from 60 to 85 weight percent of the polyurethane and from 15 to 40 weight percent of the NCO-reactive, impact modifier. In addition to the foregoing critical components, this composition optionally contains other components such as impact modifiers which are not reactive with isocyanates such as those described in U.S. Patent 4,822,827; fillers and reinforcing fibers; and other common additives to plastic compositions such antioxidants, pigments and dyes, blowing agents, antistatic agents and UV absorbers which do not interfere with the functions of the critical components.

The composition of the second aspect of this invention comprises in addition to the polyurethane previously described a homogeneous, NCO-reactive polymer and an impact modifier, i.e., a rubbery polymer.

The homogeneous NCO-reactive polymer is similar to the previously defined NCO-reactive, impact modifying polymer except that it does not have a a rubber moiety chemically bonded to it. Typically, the NCO-reactive polymer is polymer of one or more ethylenically unsaturated monomers having at least one active hydrogen moiety as defined and exemplified hereinbefore. While the polymer can consist entirely of the polymerized NCO-reactive monomer(s), it is preferably a copolymer of the NCO-reactive monomer(s) and one or more other ethylenically unsaturated monomers as exemplified hereinbefore. Preferred NCO-reactive monomers are as exemplified hereinbefore. Preferred other monomers are monovinylidene aromatics, alkyl acrylates and methacrylates and ethylenically unsaturated nitriles and mixtures thereof, with styrene, methyl methacrylate, ethyl acrylate, butyl acrylate and acrylonitrile being most preferred. When said other monomer(s) is employed in the isocyanate-reactive copolymer, it is employed at a concentration such the compatibility of the NCO-reactive polymer with the polyurethane is not significantly reduced. Preferably the concentration of the NCO-reactive monomer(s) is no greater than about 40 weight percent based on the weight of the NCO-reactive copolymer, preferably at a concentration in the range from 0.05 to 10 weight percent, with the balance of the copolymer being the other monomer. The number average molecular weight ($M_n$) of the isocyanate-reactive polymer is preferably in the range from 5000 to 200,000, more preferably from 10,000 to 150,000, most preferably from 10,000 to 125,000. The $M_n$ of the polymer is determined by gel permeation chromatography or similar technique.

The impact modifier (rubbery polymer) is suitably any polymer known in the art to enhance impact strength in various types of polymers. See, for example, those polymers disclosed in U.S. Patent 4,822,827. A preferred group of impact modifiers are the particulate rubbery polymers such as ABS polymers, methyl methacrylate/butadiene/styrene polymers (MBS polymers), methyl methacrylate/butyl acrylate polymers, and mixtures thereof, with ABS polymers and MBS polymers being especially preferred. The preferred impact modifiers have a rubber content in the range from 10 to 80 weight percent and an average rubber particle diameter in the range from 0.05 to 5 micrometers.

In the composition of the second aspect, the NCO-reactive polymer is employed in an amount sufficient to form a stable dispersion of the impact modifier in the polyurethane and to enable the impact modifier to increase the notched Izod impact strength (toughness) of the polyurethane to a value which is greater than the notched Izod impact strength of a comparable blend of the polyurethane, the polymer having no NCO-reactive moiety and the impact modifier (rubbery polymer). Preferably, the composition of the second aspect comprises from 50 to 95 weight percent of the polyurethane, from 0.1 to 15 weight percent of the NCO-reactive polymer and from 4.9 to 49.9 weight percent of the impact modifier. Most preferably, the composition comprises from 60 to weight 85 percent of the polyurethane; from 0.5 to 10 weight percent of the NCO-reactive polymer; and from 10 to 39.5 weight percent of the impact modifier including mixtures of such impact modifying polymers. In addition to the foregoing three critical components, this composition optionally contains other components fillers and reinforcing fibers and other common additives to plastic compositions such as antioxidants, pigments and dyes, blowing agents, antistatic agents, wax lubricants and UV absorbers which do not interfere with the functions of the critical components.

The compositions of both aspects can be prepared by dispersing the NCO-reactive, impact modifying

copolymer or a combination of the isocyanate-reactive polymer and the impact modifier in either of the reactants used to prepare the polyurethane and then contacting the resultant dispersion with the other urethane reactant under conditions sufficient to form the polyurethane. See, for example, the conditions described in U.S. Patent 4,822,827. Under such conditions, the reaction of isocyanate moieties and active hydrogen moieties can be carried out in absence of a urethane-type catalyst. However, when fast reaction time is desirable, e.g., less than one minute, the urethane reaction is carried out in the presence of a urethane-type catalyst which is effective to catalyze the reaction of the active hydrogen moieties with the isocyanate moieties. The urethane catalyst is used in an amount comparable to that used in conventional urethane-type reactions, preferably in an amount from 0.001 to 5 weight percent based on the weight of the reaction mixture. Any suitable urethane catalyst may be used including tertiary amines, such as, for example, triethylenediamine, N-methyl morpholine, N-ethyl morpholine, diethyl ethanolamine, N-coco morpholine, 1-methyl-4-dimethylaminoethyl piperazine, 3-methoxy-N--dimethylpropylamine, N,N-dimethyl-N',N'-methyl isopropyl propylenediamine, N,N-diethyl-3-diethylaminopropylamine, dimethylbenzylamine and other catalysts disclosed in U.S. Patent 4,731,416. Preferred catalysts are the tin catalysts such as the liquid organotin carboxylates, e.g., those catalysts prepared by the reaction on one mole of dialkyltin oxide with one mole of a carboxylic acid as disclosed in more detail in U.S. Patent No. 3,661,887.

Alternatively, the copolymer or the combination of polymer and impact modifier can be admixed, preferably in comminuted form such as powder and pellets with the finished polyurethane also in a similarly comminuted form. The resulting physical mixture is then homogenized and/or fluxed by conventional melt blending means such as by extrusion, milling and Banbury mixing. When the polyurethane is prepared by a reactive extrusion method using a continuous twin screw reactor extruder such as described in U.S. Patent 3,642,964, the copolymer or combination of polymer and impact modifier may be added in any conventional manner, e.g., initially with the urethane-forming reactants or at a later stage during polymer formation.

These compositions can be obtained in both cellular and non-cellular form. The cellular compositions, which may be classified as microcellular, can be prepared by methods well recognized in the art. For example, a blowing agent can be incorporated in the reaction mixture employed in the preparation of the compounds described above and subjected to foaming conditions such as those described in U.S. Patent 4,822,827. The compositions can be converted to noncellular shapes by standard molding techniques known in the art of molding thermoplastic or thermoset polyurethanes. Such techniques include reaction injection molding and cast molding at the time the polyurethane is prepared and injection molding, extrusion, compression molding, blow molding calendering and thermoforming in the case of fabricating the finished polymer composition. The marked resistance of the polyurethane component employed in the compositions of this invention to deformation or decomposition upon exposure to temperatures involved in melt processing greatly facilitates the fabrication of articles from the compositions.

The following examples are given to illustrate the invention and should not be interpreted as limiting it in any way. Unless stated otherwise, all parts and percentages are given by weight.

Example 1

A. Preparation of Isocyanate-Reactive Impact Modifying Polymer

Into a 5-liter, glass reactor equipped with an agitator, thermocouple, steam heater, feed tanks, pumps and a computer control are charged 50 parts on a solids basis of a monodisperse butadiene/styrene (93 percent/7 percent) copolymer latex (volume average diameter 0.12 micrometer). This latex was contacted with 50 parts of a feed mixture containing71.7 percent styrene, 25.9 percent acrylonitrile, 0.4 percent of n-octyl mercaptan and 2 percent hydroxyethyl methacrylate by continuously adding the feed mixture to the latex over a 4 hour period at 80°C. Simultaneously, 24 parts of an aqueous solution containing 4.2 percent of sodium dodecylbenzene sulfonate and 0.31 percent of sodium peroxydisulfate (0.15 parts based on total monomers) are continuously added to the reactor over the four hour period. Following the addition, the resulting reaction mixture was heated for an additional 0.5 hour while maintaining the reaction mixture at 80°C. The reaction mixture was steam stripped to remove residual monomers and other impurities from the reaction mixture, stabilized by adding 0.8 parts of an antioxidant containing 25 percent of a hindered phenol antioxidant and 75 percent of dilaurylthiodipropanate, and the resulting polymer was then isolated by freeze coagulation. This polymer, hereinafter designated as IRR-A, was dried at 82°C in a desiccant dryer to less than 0.02 percent moisture before combining with the polyurethane.

Following the foregoing procedure, an isocyanate-reactive, impact modifying polymer was prepared by copolymerizing 20 parts of a monomeric mixture of 98.0 percent ethyl acrylate, 1.0 percent hydroxyethyl methacrylate and 1.0 percent allyl methacrylate in the presence of 80 parts of polybutadiene rubber particulate

(volume average diameter of 0.12 micrometer) to form a particulate copolymer having a rubber core and an NCO-reactive, rubbery copolymeric shell. This polymer, designated as IRR-B, was mixed as a latex with an ABS resin (ABS B as defined hereinafter) and then recovered as a blend of NCO-reactive polymer and ABS resin by freeze coagulation and drying at 82°C to less than 0.02 percent moisture in a desiccant dryer before combining with the polyurethane.

B. Preparation of Impact Modifier

An ABS grafted rubber concentrate was prepared by subjecting a reaction mixture of 52 parts of a monomeric mixture of 72 percent styrene and 28 percent acrylonitrile to emulsion polymerization conditions having dispersed therein 48 parts of a bimodal (volume average diameter or the two sizes of particles 0.12 micrometer/0.8 micrometer) butadiene/styrene (93/7) copolymer latex. A portion of this impact modifier, hereinafter designated as ABS-B, was mixed in emulsion form with the NCO-reactive polymer prepared in Part A. The remaining portion was recovered by freeze coagulation and dried at 82°C to less than 0.02 percent moisture.

A solution-polymerized ABS resin was prepared by the polymerization of 80 parts of a styrene/acrylonitrile (70/30) mixture having dissolved therein 20 parts of styrene/butadiene (30/70) copolymer block rubber. The resulting impact modifier, herein-after designated as ABS-C, was recovered as a particulate having a rubber particle size of 1 micrometer (volume average diameter).

C. Preparation of Polyurethane

Into a 50 gallon kettle equipped with a stirrer, thermocouple, a nitrogen source and a vacuum valve was charged 100 parts of 1,4-cyclohexanedimethanol, 0.82 parts of trisnonylphenyl-phosphite and 0.69 parts of a hindered phenol represented by the structural formula:

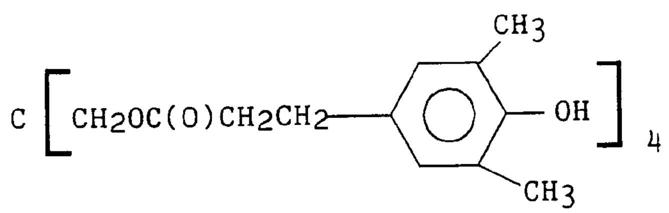

These ingredients were mixed and heated to 98.9°C and dehydrated under vacuum for 2 hours. This diol mixture was supplied by a gear pump at the rate of 0.76 Kg/min. to the feed port of a twin-screw extruder preheated to about 232°C. Through a second gear pump was delivered 4,4′-methylenebis(phenylisocyanate)(MDI) into the same feed port of the extruder at the weight ratio of 172.7 parts per 100 parts of the diol mixture. A third gear pump was used to deliver Formrez UL-22 (a dibutyltin mercaptate urethane catalyst supplied by Witco Chemical) into the same feed port at the weight ratio of 0.17 parts for every 100 parts of diol mixture. The resulting mixed components react to form a polyurethane which was extruded onto a metal conveyor belt which was maintained at 21°C. This polyurethane (hereinafter designated as TPU-A)is cooled, diced into pellets and dried in a dehumidifying hopper before further use.

Following the foregoing procedure, two additional polyurethanes were prepared from the following reactant mixtures:

1.0 MDI/0.85 CHDM/0.15 hydrogenated bisphenol-A equivalents
1.0 MDI/0.85 CHDM/0.15 1,4-cyclohexanediol equivalents

which were designated hereinafter as TPU-B and TPU-C.

D. Preparation of NCO-Reactive Polymer

Into a 3-liter, stainless steel reactor equipped with an agitator and a nitrogen source were charged 180 g of acrylonitrile, 562 g of styrene, 7.5 g of 2-hydroxyethyl acrylate, 2.4 g of n-dodecyl mercaptan and 0.135 g of 1,3-di-tert-butylperoxy-cyclohexane. The resulting mixture was heated at 110°C for 1.5 hour and then at 115°C for 1.0 hour. An aliquot of 1.5 g of n-dodecyl mercaptan was then added and the mixture was heated at 140°C for 1 hour and then at 155°C for an additional hour. The polymer containing 75 percent styrene/24 percent acrylonitrile/1 percent 2-hydroxyethyl acrylate was isolated by precipitation with methanol. The recovered polymer had a weight average molecular weight of 60,200 and a number average molecular weight of 32,000 by size exclusion chromatography. This polymer, hereinafter designated as IRP-A, was dried at 80°C to less

than 0.02 percent moisture.

E. Preparation and Testing of Blend Compositions

The polymeric components of Parts A-C were combined in the proportion as indicated in the following Table by first tumble blending the dry pellets (0.94 cm x 0.16 cm) of the components and then compounding them in a single pass through a Brabender twin screw extruder having a barrel temperature profile of 245°C and operating at 15 rpm. The resulting blends in the form of pellets were redried at 115°C and injection molded into test bars (21 cm x 1.3 cm x 0.32 cm) on an Arburg 220E (2 oz. (0.0591 Pa)) injection molding machine having a barrel temperature profile of 225°C, a nozzle temperature of 224°C and a mold temperature of 100°C and operating at a screw speed of 75, an injection speed of 3, an injection pressure of 850 psi (5860 Pa) and an injection time and cooling time of 10 and 25 seconds, respectively. The specimens were tested for physical properties and the results of such tests are reported in the following Table I.

A three-part portion of the NCO-reactive polymer of Part D, IRP-A, was combined with 75 parts of TPU-A and 22 parts of ABS-C by melt compounding using the foregoing procedure and then formed into test specimens. The specimens were tested for physical properties and the results of such tests are reported in Table I.

In Example 4 as indicated in Table I, the impact modifier in latex form was combined with the isocyanate-reactive, impact modifying polymer in latex form and then the latexes were coagulated, dried to less than 0.2% moisture and melt compounded prior to blending with the polyurethane.

F. Comparative Sample

For purposes of comparison, comparative samples were prepared using a mixture of some of the components listed in Table I. These samples were also tested and the results of these tests are also reported in Table I.

TABLE I

| Sample No. | Component Type[1] | Component Ratio | Strength[2]: Tensile Yield psi | Tensile Yield mPa | Notched Izod FT-lb/in. of/notch | Notched Izod J/M | Appearance[3] |
|---|---|---|---|---|---|---|---|
| 1 | TPU-A/ABS-C/IRR-A | 65/22.4/12.6 | 7170 | 49.4 | 15.1 | 800 | excellent |
| 2 | TPU-B/ABS-C/IRR-A | 65/22.4/12.6 | 7650 | 52.8 | 11.1 | 585 | excellent |
| 3 | TPU-C/ABS-C/IRR-A | 65/22.4/12.6 | 7515 | 51.8 | 12.5 | 655 | excellent |
| $C_1$* | TPU-A/ABS-C | 65/35 | 8710 | 60.1 | 6.5 | 345 | laminated |
| $C_2$* | TPU-A/ABS-C/ABS-B | 65/22.4/12.6 | 8100 | 55.9 | 8.8 | 465 | laminated |
| $C_3$* | TPU-A/ABS-C/ABS-B/NRR-B | 65/22.4/7.4/5.2 | 7215 | 49.8 | 8.8 | 465 | laminated |
| 4 | TPU-A/ABS-C/ABS-B/IRR-B | 65/22.4/7.4/5.2 | 7080 | 48.8 | 11.9 | 620 | excellent |
| 5 | TPU-A/ABS-C/IRP-A | 65/22/13 | 9585 | 66.1 | 5.0 | 265 | excellent |
| $C_4$* | TPU-A/ABS-C/SAN[4] | 65/22/13 | 9340 | 64.4 | 2.6 | 175 | laminated |

* Not an example of the invention.

1 Acronyms as previously defined and ratios are weight ratios. ABS-B and IRR-B are mixed in latex form, coagulated, dried and melt compounded. NRR-B is similar to IRR-B except that it contains no NCO-reactive moiety and is combined with ABS-B in latex form, coagulated, dried and melt compounded.

2 Tensile yield determined by ASTM D-638 at 0.2 inch/minute (0.85 mm/s).

3 Appearance is a visual observation of the sample where excellent indicates that the test specimen exhibits no visible phase separation and laminated indicates at least two separate phases can be visually observed and the failure surface in the notched Izod test has a rough surface.

4 Styrene/acrylonitrile copolymer similar to IRP-A, but without NCO reactive monomer.

As evidenced by the data shown in Table I, the blend compositions of the present invention exhibit notched Izod impact strengths greater than and component compatibilities superior to those of the comparative samples.

## Claims

1. A thermally processable, polyurethane composition capable of withstanding temperatures in excess of 80°C without deforming, said composition comprising (a) a thermally processable, rigid polyurethane and (b) an NCO-reactive, impact modifying, multi-phase polymer in an amount sufficient to increase the impact strength of the composition to a value that is greater than the impact strength of a comparable blend of the polyurethane and an impact modifying, multi-phase polymer similar to said NCO-reactive polymer except that it contains no NCO-reactive moiety, said NCO-reactive polymer being either dispersed in or co-continuous with the polyurethane.

2. The composition of Claim 1 wherein the polyurethane has a tensile modulus of at least 150,000 psi (1034 kPa) and has a hard segment having a $T_g$ of at least 60°C.

3. The composition of Claim 2 wherein the polyurethane consists essentially of the reaction product of an organic diisocyanate and a diahl chain extender, at least 50 weight percent of which diahl extender is a cycloalkanedialkylene diahl, a cycloalkane diahl or a mixture thereof.

4. The composition of Claim 3 wherein the polyurethane consists essentially of the reaction product of diphenylmethane-4,4′-diisocyanate or a liquid polymer of diphenyl-methane-4,4′-diisocyanate and cyclohexanedimethanol, cyclohexanediol or a mixture thereof.

5. The composition of any one of the preceeding claims wherein the multi-phase polymer is a random, block or graft copolymer of a combination thereof having copolymerized therein (1) at least one ethylenically unsaturated monomer having at least one NCO-reactive moiety and (2) at least one ethylenically unsaturated monomer which is inert to isocyanate moieties and is capable of forming a rubber-like polymer, provided that said multi-phase polymer has a disperse phase of discrete rubbery polymer particles serving as substrates having grafted thereon a portion of the copolymerized NCO-reactive moieties as a superstrate and a continuous phase of the remainder of the copolymer.

6. The composition of Claim 5 wherein the monomer having the NCO-reactive moiety is a hydroxyalkyl ester of an ethylenically unsaturated carboxylic acid, an aminoalkyl ester of an ethylenically unsaturated carboxylic acid or an ethylenically unsaturated carboxylic acid and the monomer capable of forming a rubber-like polymer is a 1,3-conjugated alkadiene, an alkyl acrylate or a mixture thereof.

7. The composition of Claim 6 wherein the copolymer is a copolymer of (1) a hydroxyalkyl ester of an ethylenically unsaturated carboxylic acid, an aminoalkyl ester of an ethylenically unsaturated carboxylic acid or an ethylenically unsaturated carboxylic acid; (2) a 1,3-conjugated alkadiene, an alkyl acrylate or a mixture thereof, and (3) at least one other monomer selected from alkyl methacrylates, monovinylidene aromatic monomers, $\alpha,\beta$-ethylenically unsaturated nitriles, vinyl esters of saturated carboxylic acids, vinyl ethers, vinyl ketones and vinyl and vinylidene halides.

8. The composition of Claim 7 wherein the multi-phase polymer consists essentially of a mixture of (1) a core/shell polymeric component having a butadiene/styrene copolymer as the core substrate and an n-butylacrylate/hydroxyethyl acrylate/allyl methacrylate copolymer as the superstrate and (2) an ABS resin.

9. The composition of any one of Claims 5 to 8, wherein the NCO-reactive monomer constitutes from 0.05 to 5 weight percent of the copolymer and the impact modifying monomer constitutes from 40 to 99.5 weight percent of the copolymer.

10. A thermally processable, rubber-modified, polyurethane composition comprising (a) a thermally processable, rigid polyurethane, (b) a homogeneous, NCO-reactive polymer and (c) a particulate rubbery polymer which contains no NCO-reactive moiety and is dispersed in a continuous phase of one or both of the polymers (a) and (b) or resides at the interphase of the two polymers (a) and (b) wherein polymers (b) and (c) are present in an amount sufficient to increase the impact strength of the composition to a value greater than the impact strength of a comparable blend of the polyurethane, the rubbery polymer and a homogeneous polymer similar to the NCO-reactive polymer except that it contains no NCO-reactive moiety.

11. The composition of Claim 10 wherein the polyurethane has a tensile modulus of at least 150,000 psi (1034 kPa) and has a hard segment having a $T_g$ of at least 60°C.

12. The composition of Claim 11 wherein the polyurethane consists essentially of the reaction product of an organic diisocyanate and a diahl chain extender, at least 50 weight percent of which diahl extender is a cycloalkanedialkylene diahl, a cycloalkane diahl or a mixture thereof.

13. The composition of Claim 12 wherein the polyurethane consists essentially of the reaction product of diphenylmethane-4,4′-diisocyanate or a liquid polymer of diphenyl-methane-4,4′-diisocyanate and cyclohexanedimethanol, cyclohexanediol or a mixture thereof.

14. The composition of any one of Claims 11 to 13 wherein the NCO- reactive polymer is a random copolymer having copolymerized therein (1) at least one ethylenically unsaturated monomer having at least one NCO-reactive moiety and (2) at least one ethylenically unsaturated monomer which is inert to isocyanate moieties and does not form rubber-like polymers.

15. The composition of Claim 14 wherein the monomer having the NCO-reactive moiety is a hydroxyalkyl ester of an ethylenically unsaturated carboxylic acid, an aminoalkyl ester of an ethylenically unsaturated carboxylic acid or an ethylenically unsaturated carboxylic acid and the NCO-inert monomer is selected from alkyl methacrylates, monovinylidene aromatic monomers, $\alpha,\beta$-ethylenically unsaturated nitriles, vinyl esters of saturated carboxylic acids, vinyl ethers, vinyl ketones and vinyl and vinylidene halides.

16. The composition of Claim 15 wherein the NCO-reactive monomer constitutes from 0.05 to 10 weight percent of the copolymer and the NCO-inert monomer constitutes from 99.95 to 90 weight percent of the copolymer.

17. The composition of any one of Claims 1 to 9 comprising from 50 to 95 weight percent of the polyurethane and from 5 to 50 weight percent of the NCO-reactive, multi-phase polymer.

18. The composition of any one of Claims 10 to 16, comprising from 50 to 95 weight percent of the polyurethane and from 5 to 50 weight percent of the combined NCO-reactive, homogeneous polymer and the rubbery polymer.

19. The composition of Claim 18 comprising from 50 to 95 weight percent of the polyurethane, from 0.1 to 15 weight percent of the NCO-reactive polymer and from 4.9 to 49.9 weight percent of the rubbery polymer.